# EUROPÄISCHE PATENTSCHRIFT

(11) **EP 0 613 515 B1**
(45) Veröffentlichungstag und Bekanntmachung des Hinweises auf die Patenterteilung: **25.10.1995**
(21) Anmeldenummer: 92917017.3
(22) Anmeldetag: 08.08.1992
(51) Int. Cl.: E21D 15/51, F16K 17/04

(54) **HOCHDRUCKHYDRAULIKVENTIL**
HIGH-PRESSURE HYDRAULIC VALVE
SOUPAPE HYDRAULIQUE HAUTE PRESSION

(30) Priorität: 26.11.1991 DE 9114696 U
(43) Veröffentlichungstag der Anmeldung: 07.09.1994
(73) Patentinhaber: DAMS GmbH, D-45527 Hattingen (DE)
(72) Erfinder: SCHLEBUSCH, Heinz-Jürgen, D-4690 Herne (DE)
(74) Vertreter: Schneiders, Josef
(86) Internationale Anmeldenummer: EP9201813
(87) Internationale Veröffentlichungsnummer: WO9311340

(56) Entgegenhaltungen:
- EP-A- 0 096 303

## Beschreibung

Die Erfindung betrifft ein Hochdruckhydraulikventil, insbesondere ein Druckbegrenzungsventil zur Verwendung im untertägigen Bergbau, mit einem in einer Ventilbohrung verschiebbaren, von dem hydraulischen Druckmedium beaufschlagten Kolbenschieber, der an seinem Außenumfang mit einer dünnen, harten und an der Oberfläche glatten Beschichtung versehen ist, an der ein der Ventilbohrung zugeordneter Dichtungsring gleitet. Die dünne, harte und an der Oberfläche glatte Beschichtung soll dafür sorgen, daß der Kolbenschieber leicht in dem Dichtungsring gleitet, dabei möglichst wenig verschleißt und zugleich eine möglichst gute Abdichtwirkung hat.

Nach dem Stande der Technik wird für die dünne, harte und an der Oberfläche glatte Beschichtung gewöhnlich eine Hartverchromung gewählt. Es hat sich jedoch herausgestellt, daß eine solche Hartverchromung den Ansprüchen nicht gerecht wird, wenn als hydraulisches Druckmedium anstelle von Öl oder einer Öl-Wasser-Emulsion reines Wasser verwendet wird. In diesem Falle kommt es wegen der fehlenden Schmierwirkung des Öles zu einer starken Reibung zwischen der hartverchromten Oberfläche des Kolbenschiebers und dem Dichtungsring, so daß der Kolbenschieber sich nur noch schwergängig bewegen läßt, was zu einem verstärkten Verschleiß an Kolbenschieber und Dichtung führt und dementsprechend die Abdichtwirkung beeinträchtigt.

Aus Umweltschutzgründen wird zunehmend gefordert, die in der Hochdruckhydraulik verwendeten Hydrauliköle und Wasser-Öl-Emulsionen durch reines Wasser zu ersetzen, weil die Hydrauliköle umweltschädliche Substanzen enthalten. Letzteres gilt insbesondere für die Hochdruckhydraulik im Bergbau, wo beispielsweise im Bereich des hydraulischen Strebausbaus große Mengen an Hydraulikflüssigkeit benötigt und verbraucht werden. Aus diesem Grunde besteht ein dringendes Bedürfnis, gerade hier reines Wasser als hydraulisches Druckmedium zu verwenden.

In diesem Zusammenhang ist bereits versucht worden, anstelle der bekannten Hartverchromung eine Gleitlackbeschichtung zu verwenden, um auf diese Weise für eine Dauerschmierung zu sorgen. Es hat sich jedoch herausgestellt, daß diese Gleitlackbeschichtung sich alsbald von der Oberfläche des Schieberkolbens ablöst, insbesondere wenn die beschichteten Oberflächen in Bereichen angeordnet sind, die beim Öffnen des Ventiles großen Fließgeschwindigkeiten des hydraulischen Druckmediums ausgesetzt sind.

Es ist Aufgabe der Erfindung, das Hochdruckhydraulikventil der eingangs genannten Art dahingehend weiterzubilden, daß der Kolbenschieber auch bei Verwendung von reinem Wasser als hydraulisches Druckmedium gegenüber dem weichen Dichtungsmaterial des Dichtringes einen geringen Reibungsbeiwert hat, gut dichtet und eine große Lebensdauer hat.

Zur Lösung dieser Aufgabe schlägt die Erfindung ausgehend von einem Hochdruckhydraulikventil der eingangs genannten Art vor, daß die Beschichtung aus Titannitrid mit einer Schichtdicke von 1 bis 4 µm besteht.

Es hat sich herausgestellt, daß ein mit Titannitrid beschichteter Kolbenschieber auch bei der Verwendung von reinem Wasser als hydraulisches Druckmedium nur einen sehr geringen Reibungsbeiwert hat, eine ausgezeichnete Abdichtung erzielt und außerordentlich lange Standzeiten erreicht. Dabei haftet die sehr dünne Titannitrid-Beschichtung außerordentlich fest an der Kolbenoberfläche und wird auch durch extrem schnell strömendes Wasser nicht von der Oberfläche abgelöst.

Zweckmäßig besteht der Körper des Kolbenschiebers aus einer nicht-rostenden Legierung. Die Verwendung einer solchen nicht-rostenden Legierung hat den Vorteil, daß das durch die extrem dünne Titannitrid-Beschichtung diffundierende Wasser unterhalb der Titannitrid-Beschichtung keine Oxide bilden kann, die die Qualität und Beständigkeit der Oberfläche des Schieberkolbens beeinträchtigen würden. Auf einer solchen nicht-rostenden Legierung haftet die Titannitrid-Beschichtung, die vorzugsweise im PVD-Verfahren aufgebracht wird, ausgezeichnet. Die Anwendung des PVD-Verfahrens beim Aufbringen der Titannitrid-Beschichtung hat den besonderen Vorteil, daß sich das Werkstück hierbei nur wenig erwärmt, so daß das Vergütungsgefüge der verwendeten Legierung nicht beeinträchtigt wird.

Zweckmäßig erstreckt sich die Beschichtung über die gesamte äußere Oberfläche des Kolbenschiebers, so daß dieser überall gleichmäßig geschützt ist.

Zweckmäßig befindet sich die den Kolbenschieber aufnehmende Ventilbohrung in einem Gehäuseeinsatz, der ebenfalls aus einer nicht-rostenden Legierung besteht. Hierdurch wird sichergestellt, daß auch an der Innenwand der Ventilbohrung keine Oxydationserscheinungen auftreten können, die die Leichtgängigkeit des Kolbenschiebers beeinträchtigen könnten.

Gegebenenfalls kann auch die Innenwandung der Ventilbohrung mit einer Beschichtung aus Titannitrid oder einem äquivalenten Hartstoff versehen sein. In diesem Fall wären beide aneinander gleitenden Flächen extrem hart, glatt und verschleißfest, woraus sich eine noch längere Lebensdauer ergibt.

Ein Ausführungsbeispiel der Erfindung wird im folgenden anhand der Zeichnung näher erläutert. Es zeigen:

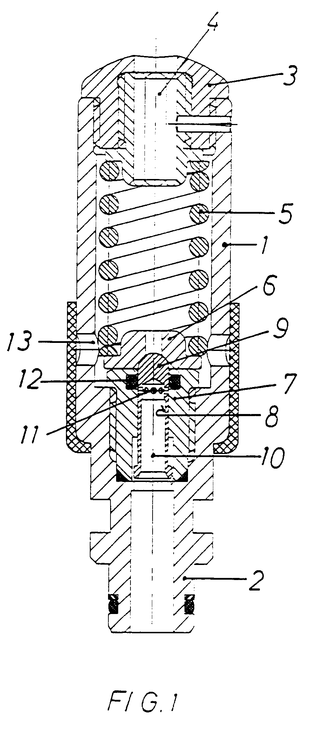

- Fig. 1: einen Längsschnitt durch ein Hochdruckhydraulikventil gemäß der Erfindung;
- Fig. 2: einen Längsschnitt durch den mit Titannitrid beschichteten Kolbenschieber.

In der Zeichnung ist das Ventilgehäuse mit dem Bezugszeichen 1 bezeichnet. Das Ventilgehäuse 1 ist an einem Ende mit einem Druckstutzen 2 versehen, der beispielsweise an den Druckraum eines hydraulischen Grubenstempels anschließbar ist. An dem Druckstutzen 2 gegenüberliegenden Ende ist das Gehäuse 1 mittels eines Schraubdeckels 3 verschlossen.

Mittig in dem Schraubdeckel 3 ist eine Stützschraube 4 angeordnet, die in axialer Richtung des Ventilgehäuses 1 verstellbar ist und eine im Inneren des Gehäuses befindliche Druckfeder 5 abstützt. Durch axiale Verstellung der Stützschraube 4 kann die Federkraft der Druckfeder 5 verstellt werden. Die Druckfeder 5 stützt sich mit ihrem der Stützschraube 4 abgewandten Ende an einem Druckteller 6 ab, der seinerseits flächig an einem in dem Ventilgehäuse 1 befindlichen Gehäuseeinsatz 7 anliegt. Dieser Gehäuseeinsatz 7 besteht aus einer nicht-rostenden Legierung und ist mit einer als Ventilbohrung 8 dienenden Längsbohrung versehen, die mit dem Durchflußkanal des Druckstützens 2 fluchtet und in der axial verschiebbar ein Kolbenschieber 9 angeordnet ist. Dieser Kolbenschieber 9 weist eine Längsbohrung 10 auf, die sich von dem dem Druckstutzen 2 zugewandten Ende des Kolbenschiebers 9 bis in dessen vorderes Drittel erstreckt, wo der Kolbenschieber 9 an seiner dem Druckteller 6 zugewandten Seite geschlossen ist. Im Endbereich der axialen Längsbohrung 10 ist der Kolbenschieber 9 mit mehreren radialen Bohrungen 11 versehen, die an der zylindrischen Außenseite des Kolbenschiebers 9 ausmünden.

Am dem Druckteller 6 zugewandten Ende des Gehäuseeinsatzes 7 ist an der Innenseite eine die Ventilbohrung 8 umgebende Nut vorgesehen, in die ein O-Ring 12 aus weichem Dichtungsmaterial, beispielsweise aus Gummi, eingelegt ist. Dieser O-Ring 12 gleitet an der zylindrischen Außenseite des Kolbenschiebers 9 und sorgt für einen völlig dichten Abschluß zwischen dem Gehäuseeinsatz 7 und dem darin verschiebbaren Kolbenschieber 9.

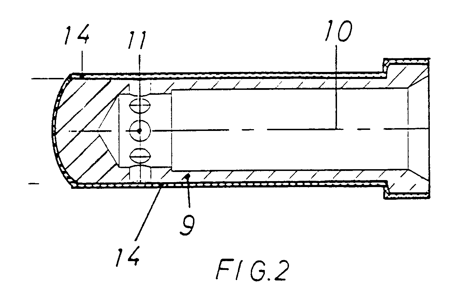

Der Kolbenschieber 9 liegt mit seinem geschlossenen Ende an dem Druckteller 6 an und kann diesen bei entsprechender Druckbeaufschlagung unter Kompression der Druckfeder 5 von dem Gehäuseeinsatz 7 abheben. Bei der damit verbundenen Verschiebung des Kolbenschiebers 9 gelangen dessen radiale Bohrungen 11 hinter den O-Ring 12 und treten aus der Ventilbohrung 8 heraus, so daß das hydraulische Druckmedium, hier reines Wasser, durch diese radialen Bohrungen 11 austreten kann und über Gehäuseabflußöffnungen 13 austreten kann. Wie insbesondere aus Figur 2 ersichtlich ist, ist der Kolbenschieber 9 an seiner gesamten Oberfläche mit einer Beschichtung 14 aus Titannitrid beschichtet. Diese Beschichtung 14 aus Titannitrid hat eine Schichtdicke von 1 bis 4 µm und ist in Figur 2 zur Verdeutlichung übertrieben dick dargestellt.

Der Körper des Kolbenschiebers 9 besteht aus einer nicht-rostenden Legierung, die zur Steigerung der Festigkeit natürlich entsprechend vergütet ist. Bei der Beschichtung 14 handelt es sich um eine sogenannte PVD-Beschichtung (Physical Vapor Deposition - Physikalische Abscheidung aus der Dampfphase). Bei diesem Verfahren, das auch als Ionenplattieren bezeichnet wird, wird die Hartstoffschicht - hier Titannitrid - bei einer Temperatur von unter 500° auf den metallischen Werkstoff aufgedampft. Dabei ergibt sich eine besonders fest haftende, harte und glatte Oberfläche.

Gegebenenfalls kann auch die Innenfläche der Ventilbohrung mit einer entsprechenden Hartstoffbeschichtung versehen sein, was in der Zeichnung nicht näher dargestellt ist.

## Patentansprüche

1. Hochdruckhydraulikventil, insbesondere Druckbegrenzungsventil zur Verwendung im untertägigen Grubenbetrieb, mit einem in einer Ventilbohrung (8) verschiebbaren, von dem hydraulischen Druckmedium beaufschlagten Kolbenschieber (9) der an seinem Außenumfang mit einer dünnen, harten und an der Oberfläche glatten Beschichtung (14) versehen ist, an der ein der Ventilbohrung zugeordneter weicher Dichtungsring (12) gleitet,
**dadurch gekennzeichnet,**
daß die Beschichtung (14) aus Titannitrid mit einer Schichtdicke von 1 bis 4 µm besteht.

2. Ventil nach Anspruch 1, dadurch gekennzeichnet, daß der Körper des Kolbenschiebers (9) aus einer nichtrostenden Legierung besteht.

3. Ventil nach den Ansprüchen 1 und 2, dadurch gekennzeichnet, daß die Beschichtung (14) sich über die gesamte äußere Oberfläche des Kolbenschiebers (9) erstreckt.

4. Ventil nach einem der Ansprüche 1 bis 3, dadurch gekennzeichnet, daß die den Kolbenschieber (9) aufnehmende Ventilbohrung (8) sich in einem Gehäuseeinsatz (7) befindet, der ebenfalls aus einer nichtrostenden Legierung besteht.

5. Ventil nach Anspruch 4, dadurch gekennzeichnet, daß die Innenwandung der Ventilbohrung (8) ebenfalls mit einer Beschichtung aus Titannitrid versehen ist.

## Claims

1. A high-pressure hydraulic valve, in particular a pressure limiting valve for use in underground mining, comprising a plunger (9) which is displaceable in a valve bore (8) and which is acted upon by the hydraulic pressure medium and which at its outer periphery is provided with a thin hard coating (14) which is smooth at the surface, a soft sealing ring (12) which is associated with the valve bore sliding against the coating, characterised in that the coating (14) comprises titanium nitride with a layer thickness of from 1 to 4 µm.

2. A valve according to claim 1 characterised in that the body of the plunger (9) comprises a non-corroding alloy.

3. A valve according to claims 1 and 2 characterised in that the coating (14) extends over the entire outside surface of the plunger (9).

4. A valve according to one of claims 1 to 3 characterised in that the valve bore (8) which accommodates the plunger (9) is disposed in a housing insert (7) which also comprises a non-corroding alloy.

5. A valve according to claim 4 characterised in that the inside wall of the valve bore (8) is also provided with a coating of titanium nitride.

## Revendications

1. Soupape hydraulique sous haute pression, notamment soupape de limitation de pression destinée à être utilisée dans l'exploitation souterraine, avec un tiroir en forme de piston (9) déplaçable dans un alésage de piston (8), alimenté par le fluide hydraulique sous pression, qui est pourvu sur son pourtour extérieur d'un revêtement (14) mince, dur et lisse à la surface, le long duquel glisse un anneau d'étanchéité (12) souple associé à l'alésage de soupape, caractérisée en ce que le revêtement (14) est constitué de nitrure de titane en une couche d'une épaisseur de 1 à 4 µm.

2. Soupape selon la revendication 1, caractérisée en ce que le corps du tiroir en forme de piston (9) est constitué d'un alliage antirouille.

3. Soupape selon les revendications 1 et 2, caractérisée en ce que le revêtement (14) s'étend sur toute la surface extérieure du tiroir en forme de piston (9).

4. Soupape selon l'une des revendications 1 à 3, caractérisée en ce que l'alésage de soupape (8) recevant le tiroir en forme de piston (9) se trouve dans un insert de boîtier (7) qui est également réalisé en un alliage antirouille.

5. Soupape selon la revendication 4, caractérisée en ce que la paroi intérieure de l'alésage de soupape (8) est également pourvue d'un revêtement en nitrure de titane.
